# FASCICULE DE BREVET EUROPEEN

(11) **EP 2 537 753 B1**
(45) Date de publication et mention de la délivrance du brevet: **06.05.2015**
(21) Numéro de dépôt: 12305688.9
(22) Date de dépôt: 18.06.2012
(51) Int. Cl.: B64D 15/12, B64D 33/02, F02C 7/045

(54) **Procédé de réalisation d'un panneau pour le traitement acoustique integrant la fonction de traitement du givre avec de l'air chaud**
Verfahren zur Herstellung eines Paneels zur Geräuschsanierung, das auch eine Enteisungsfunktion mit heißer Luft umfasst
Method for producing an acoustic treatment panel including the function of de-icing with hot air

(30) Priorité: 20.06.2011 FR 1155381
(43) Date de publication de la demande: 26.12.2012
(73) Titulaire: Airbus Opérations SAS, 31060 Toulouse (FR)
(72) Inventeur: Porte, Alain, 31770 Colomiers (FR); Chelin, Frédéric, 32430 Encausse (FR); Albet, Grégory, 31190 Grepiac (FR)
(74) Mandataire: Fantin, Laurent

(56) Documents cités:
- EP-A1- 1 376 534
- WO-A2-2010/012900
- FR-A1- 2 917 067
- US-A- 3 516 895

## Description

La présente invention se rapporte à un procédé de réalisation d'un panneau pour le traitement acoustique intégrant la fonction de traitement du givre avec de l'air chaud, ledit panneau étant destiné notamment à un bord d'attaque d'aéronef, et plus particulièrement à une entrée d'air d'une nacelle d'aéronef.

Un tel panneau est notamment décrit dans le brevet FR-2.917.067. Il comprend de l'extérieur vers l'intérieur une couche acoustiquement résistive, au moins une structure alvéolaire et une couche réflectrice, ainsi que des canaux délimités chacun par une paroi intercalée entre la couche acoustiquement résistive et la structure alvéolaire.

Cette solution permet de limiter les risques de communication entre l'intérieur des canaux et les cellules de la structure alvéolaire, et donc les risques de perturbation du traitement acoustique.

Selon un autre avantage, l'air chaud occupe un volume nettement inférieur par rapport aux solutions antérieures selon lesquelles il occupe le volume de certaines cellules de la structure alvéolaire, ce qui permet d'obtenir d'une part une meilleure concentration de l'air chaud contre la paroi à dégivrer renforçant l'efficacité du dégivrage, et d'autre part, une pression pneumatique plus élevée limitant le risque d'une pression à l'intérieur de la structure inférieure à celle de l'extérieur et donc la pénétration de l'air extérieur à l'intérieur du système de dégivrage.

Selon un autre avantage, l'air chaud est en contact permanent avec la peau à dégivrer, ce qui permet d'améliorer les échanges et de réduire la température de l'air chaud refoulé en sortie du système de dégivrage, et ainsi de le rejeter sans risque de brûlures de la paroi traversée, notamment lorsque cette dernière est réalisée en un matériau sensible à la chaleur tel que le composite.

Selon un premier mode de réalisation décrit dans le brevet FR-2.917.067, la couche acoustiquement résistive se présente sous la forme d'une première tôle. Pour former les canaux, une seconde tôle est mise en forme de manière à obtenir des sillons puis elle est plaquée et solidarisée à la surface intérieure de la première tôle. En suivant, on réalise des perforations dans les deux tôles au niveau des zones où elles sont en contact. En parallèle, une première face de la structure alvéolaire est solidarisée à la couche réflectrice. L'autre face de la structure alvéolaire est découpée de manière à former au niveau de ladite face des formes complémentaires à celles des canaux. En suivant, la structure alvéolaire est solidarisée à la seconde couche délimitant les canaux.

Ce mode opératoire permet de simplifier le mode d'assemblage car les parois délimitant tous les canaux sont reliées entre elles et découlent de la mise en forme d'une seule tôle.

Toutefois, la superposition de deux tôles au niveau des perforations conduit à avoir des perforations avec une longueur relativement importante qui impacte le fonctionnement du traitement acoustique et le rend moins performant.

Selon un autre inconvénient, il est difficile d'obtenir une étanchéité satisfaisante entre les conduits de la structure alvéolaire qui débouchent au droit des canaux du fait qu'il est relativement difficile de souder les extrémités des conduits avec une surface non plane et de forme complexe.

Selon un autre mode opératoire décrit dans le brevet FR-2.917.067, chaque canal se présente sous la forme d'une bande de matière mise en forme. Selon cette variante, les bandes de matière délimitant les canaux sont plaquées et solidarisées individuellement à la surface intérieure de la première tôle.

Pour assurer le passage des ondes sonores, la couche acoustiquement résistive peut comprendre un tissu métallique ou non tel qu'un Wiremesh et au moins une couche structurale par exemple une tôle métallique ou composite avec des trous oblongs ou des micro perforations.

En parallèle, une première face de la structure alvéolaire est solidarisée à la couche réflectrice. L'autre face de la structure alvéolaire est découpée de manière à former au niveau de ladite face des formes complémentaires à celles des canaux. En suivant, la structure alvéolaire est solidarisée à la seconde couche délimitant les canaux.

Ce mode opératoire n'impacte pas le fonctionnement du traitement acoustique dans la mesure où les bandes utilisées pour former les canaux dégagent la couche acoustiquement résistive dans les zones prévues pour le traitement acoustique. Toutefois, la mise en place des bandes de matière délimitant les canaux sur la couche acoustiquement résistive est relativement longue à réaliser, d'autant plus que la liaison entre les bords des bandes et la couche acoustiquement résistive doit être étanche pour ne pas perturber les traitements acoustique et/ou du givre.

Selon un autre inconvénient, comme précédemment, il est difficile d'obtenir une étanchéité satisfaisante entre les conduits de la structure alvéolaire qui débouchent au droit des canaux du fait qu'il est relativement difficile de souder les extrémités des conduits avec une surface non plane et de forme complexe. Aussi, la présente demande vise à pallier les inconvénients de l'art antérieur en proposant un procédé de réalisation d'un panneau pour le traitement acoustique intégrant la fonction de traitement du givre par air chaud permettant de simplifier le mode d'assemblage et d'obtenir un panneau performant tant sur le plan du traitement acoustique que du traitement du givre.

A cet effet, l'invention a pour objet un procédé de réalisation d'un panneau pour le traitement acoustique apte à être rapporté au niveau d'une surface d'un aéronef, notamment au niveau d'un bord d'attaque tel qu'une entrée d'air d'une nacelle d'aéronef, ledit panneau comprenant une couche acoustiquement résistive, au moins une structure alvéolaire et une couche réflectrice, ainsi que des canaux placés entre ladite structure alvéolaire et la structure acoustiquement résistive, les canaux étant délimités chacun par une paroi, ledit procédé consistant à déformer une couche afin d'obtenir au niveau d'une de ses faces des sillons, à plaquer et solidariser ladite couche déformée à la couche acoustiquement résistive de manière à délimiter les canaux, caractérisé en ce qu'il consiste à effectuer un retrait de matière de manière à supprimer au moins une partie de l'épaisseur de la couche dans laquelle sont formés les sillons entre les canaux, préalablement à l'assemblage de la structure alvéolaire.

D'autres caractéristiques et avantages ressortiront de la description qui va suivre de l'invention, description donnée à titre d'exemple uniquement, en regard des dessins annexés sur lesquels :
- la figure 1 est une coupe d'une partie d'une entrée d'air d'une nacelle d'un aéronef incorporant un panneau pour le traitement acoustique intégrant la fonction du traitement du givre,
- la figure 2 est une vue en perspective d'une partie d'un panneau pour le traitement acoustique intégrant la fonction du traitement du givre,
- les figures 3A à 3D sont des coupes illustrant les étapes d'un procédé de réalisation d'un panneau pour le traitement acoustique intégrant la fonction du traitement du givre selon l'invention,
- la figure 4A est une coupe illustrant une première phase de l'étape d'assemblage d'un panneau selon l'invention,
- la figure 4B est une coupe illustrant un détail de la figure 4A,
- la figure 5A est une coupe illustrant une deuxième phase de l'étape d'assemblage d'un panneau selon l'invention,
- la figure 5B est une coupe illustrant un détail de la figure 5A, et
- les figures 6 et 7 sont des coupes illustrant des variantes de l'invention.

La présente invention est maintenant décrite appliquée à une entrée d'air d'un ensemble propulsif d'un aéronef. Cependant, elle peut s'appliquer au niveau des différents bords d'attaque d'un aéronef au niveau desquels un traitement acoustique et un traitement du givre sont combinés, par exemple le bord d'attaque des ailes.

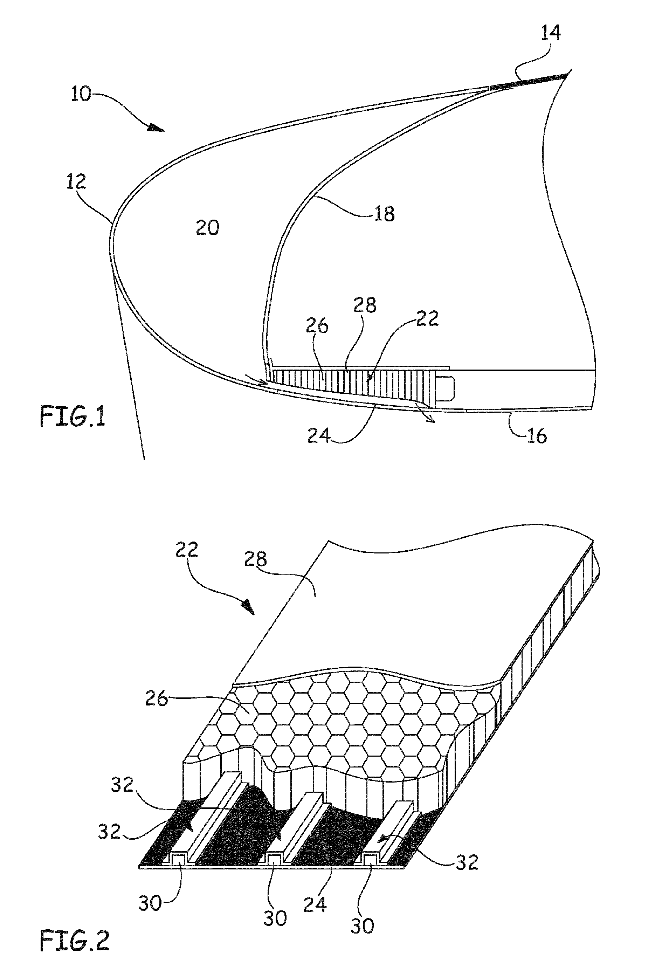

Comme illustré sur la figure 1, une entrée d'air 10 d'une nacelle d'aéronef comprend à l'avant une lèvre 12 dont une première extrémité est prolongée vers l'arrière par une paroi extérieure 14 et dont l'autre extrémité est prolongée par un conduit 16 apte à canaliser un flux d'air en direction de la motorisation. Un cadre avant 18 relie la paroi extérieure 14 et le conduit 16 et délimite avec la lèvre 12 un conduit annulaire 20.

Pour limiter l'impact des nuisances sonores, un panneau 22 visant à absorber une partie de l'énergie sonore, notamment en utilisant le principe des résonateurs d'Helmholtz est prévu notamment au niveau des surfaces aérodynamiques. De manière connue, ce panneau pour le traitement acoustique, également appelé revêtement acoustique, comprend de l'extérieur vers l'intérieur une structure acoustiquement résistive 24, au moins une structure alvéolaire 26 et une couche réflectrice 28.

Par couche ou structure, on entend une ou plusieurs couches de même nature ou non.

La structure acoustiquement résistive 24 est une structure poreuse ayant un rôle dissipatif, transformant partiellement l'énergie acoustique de l'onde sonore la traversant en chaleur.

Selon un mode de réalisation, la structure acoustiquement résistive 24 comprend au moins une couche poreuse sous la forme par exemple d'un tissu métallique ou non tel qu'un Wiremesh et au moins une couche structurale par exemple une tôle métallique ou composite avec des trous oblongs ou des micro perforations.

Dans tous les cas, la couche acoustiquement résistive 24 comprend des ouvertures permettant aux ondes acoustiques de la traverser.

La structure réflectrice 28 est imperméable aux ondes sonores.

La structure alvéolaire 26 correspond à un volume délimité par d'une part une première surface imaginaire sur laquelle peut être rapportée la couche réflectrice 28, et d'autre part, une seconde surface imaginaire sur laquelle peut être rapportée la couche acoustiquement résistive 24.

La distance séparant la première surface imaginaire et la seconde surface imaginaire peut ne pas être constante.

La structure alvéolaire 26 comprend une pluralité de conduits débouchant d'une part au niveau de la première surface, et d'autre part, au niveau de la seconde surface. Ces conduits sont obturés par d'une part la structure poreuse acoustiquement résistive 24, et d'autre part, la couche réflectrice 28 de manière à former chacun une cellule.

De préférence, deux conduits adjacents sont séparés par une paroi latérale. Selon un mode de réalisation, la structure alvéolaire 26 est constituée d'un nid d'abeilles. Ainsi, les conduits ont une forme hexagonale et les conduits adjacents sont séparés par des parois latérales.

En variante, les conduits de la structure alvéolaire peuvent avoir d'autres formes, par exemple avoir une section carrée.

Ces différentes couches et structures ne sont pas plus décrites car elles sont connues de l'homme du métier.

Pour limiter la formation du givre ou éviter son accumulation, l'entrée d'air 10 peut comprendre des moyens pour traiter le givre, utilisant de l'air chaud prélevé au niveau du moteur pour réchauffer la surface aérodynamique. Pour la suite de la description, on entend par givre aussi bien le givre que la glace, de toutes natures, de toutes structures et de toutes les épaisseurs.

Dans le cas d'une entrée d'air incorporant un traitement du givre avec de l'air chaud, un panneau 22 conçu selon l'invention peut être disposé au niveau de la lèvre, plus particulièrement dans le conduit annulaire 20 à l'avant du cadre avant 18, ou être placé au niveau du conduit 16, à l'arrière du cadre avant 18.

Selon l'invention, le panneau pour le acoustique 22 comprend des conduits ou canaux 30 placés entre la structure alvéolaire 26 et la structure acoustiquement résistive 24, les canaux 30 étant délimités chacun par une paroi 32 distincte des parois de la structure alvéolaire 26 et une des extrémités des canaux 30 étant reliée à une arrivée d'air chaud.

Sur les différentes figures, le panneau 24 est représenté selon une coupe transversale à la direction des canaux 30. Selon un agencement, les canaux 30 s'étendent selon la direction longitudinale de la nacelle.

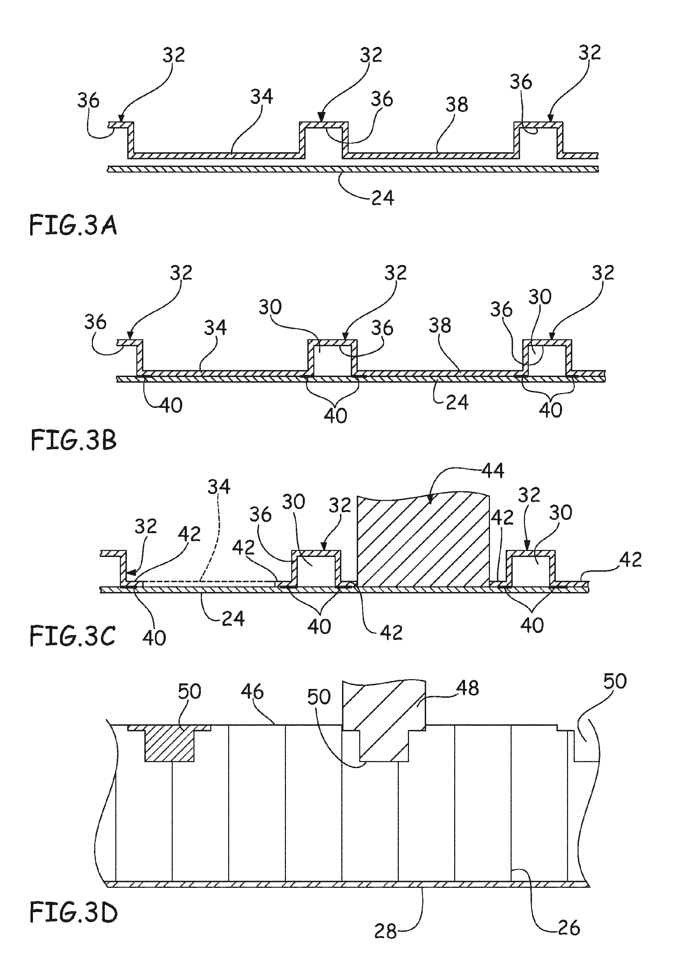

Selon l'invention, les canaux 30 sont obtenus par la mise en forme d'une couche 34 afin d'obtenir au niveau d'une de ses faces des formes en creux formant des sillons 36 de manière à délimiter une partie des canaux 30, comme illustré sur la figure 3A. Les sillons peuvent être rectilignes ou non et avoir des sections constantes ou variables sur leurs longueurs.

Selon un mode de réalisation, la couche 34 est une tôle métallique 38, en alliage de titane par exemple.

Pour obtenir les formes en créneau, la tôle 38 est mise en forme en utilisant de préférence une technique de formage superplastique. En variante, la tôle 38 peut être mise en forme par toute autre technique de formage.

En suivant, la couche 34 avec les sillons 36 est plaquée et solidarisée à la face intérieure de la couche acoustiquement résistive 24 de manière à obtenir les canaux 30, comme illustré sur la figure 3B.

La technique utilisée pour assurer la liaison entre la couche 34 et la couche acoustiquement résistive 24 dépend essentiellement des matériaux des deux couches 34 et 24.

Selon un mode de réalisation, on peut utiliser une technique de soudage, notamment par ultrasons. Toutefois, d'autres techniques pour assurer l'assemblage des deux couches 24 et 34 peuvent être utilisées, comme par exemple le collage.

Quelle que soit la technique utilisée, il est important que les bords 40 venant de part et d'autre des sillons 36 de la couche 34 soient tous les deux solidarisés à la couche 24 par une ligne continue de manière à assurer une étanchéité satisfaisante entre les canaux 30 et le reste du panneau 22.

En suivant, selon une caractéristique importante de l'invention, on effectue un retrait de matière de manière à supprimer au moins une partie de l'épaisseur de la couche 34 entre les canaux 30. Selon une première variante illustrée sur la figure 3C, entre les canaux, toute l'épaisseur de la couche 34 est retirée et l'épaisseur de matière susceptible d'être traversée par les ondes acoustiques est égale à l'épaisseur de la couche acoustiquement résistive qui est dimensionnée de manière optimale pour le traitement acoustique. De plus, le fait que les parois 32 délimitant les canaux soient liées et issues d'une même couche 34 permet de simplifier l'assemblage des éléments délimitant lesdits canaux.

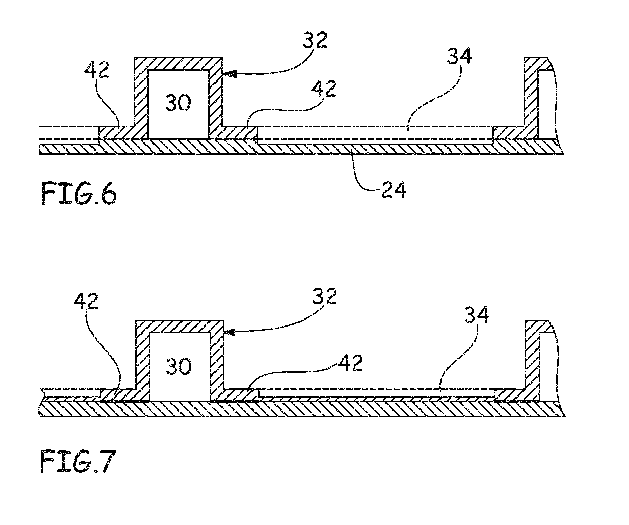

Selon une autre variante illustrée sur la figure 6, entre les canaux, toute l'épaisseur de la couche 34 et une faible épaisseur de la couche 24, de préférence moins de 25%, sont retirées. Dans ce cas, l'épaisseur de matière susceptible d'être traversée par les ondes acoustiques est légèrement inférieure à l'épaisseur de la couche acoustiquement résistive.

Selon une autre variante illustrée sur la figure 7, entre les canaux, seulement une partie de l'épaisseur de la couche 34, de préférence plus de 75%, est retirée. Dans ce cas, l'épaisseur de matière susceptible d'être traversée par les ondes acoustiques est légèrement supérieure à l'épaisseur de la couche acoustiquement résistive.

De préférence, pour chaque canaux, on conserve deux pattes 42 sensiblement parallèles à la couche 24 de part et d'autre des sillons 36 afin que pour chaque canal, la liaison entre le restant de la couche 34 et la couche acoustiquement résistive 24 soit résistante et étanche. Avantageusement, les pattes 42 ont une longueur comprise entre 2 et 10 mm pour obtenir un bon compromis entre une liaison résistante et étanche tout en conservant le maximum de surface fonctionnelle sur le plan acoustique.

Le retrait de matière peut se faire par tous moyens appropriés, notamment par jet d'eau par exemple. Sur la figure 3C, on a représenté de manière schématique en 44 les moyens pour retirer la matière.

Selon les variantes, les ouvertures permettant aux ondes de traverser la couche acoustiquement résistive peuvent être réalisées dans ladite couche acoustiquement résistive 24 avant l'assemblage avec la couche 34, être réalisées dans les couches 24 et 34 après l'assemblage mais avant le retrait de matière ou être réalisées dans ladite couche acoustiquement résistive 24 après l'assemblage et le retrait de matière.

En parallèle, la structure alvéolaire 26 et la couche réflectrice 28 sont assemblées et on réalise un retrait de matière au niveau de la face 46 de la structure alvéolaire 26 susceptible d'être plaquée contre la couche acoustiquement résistive 24, comme illustré sur la figure 3D. Sur cette figure, on a représenté de manière schématique en 48 les moyens pour retirer la matière, comme par exemple une fraise. L'étape d'assemblage et les moyens utilisés pour retirer la matière ne sont pas plus détaillés car ils sont connus de l'homme du métier.

Après cette étape, la face 46 comprend des découpes 50 aptes à recevoir chacune un canal 30.

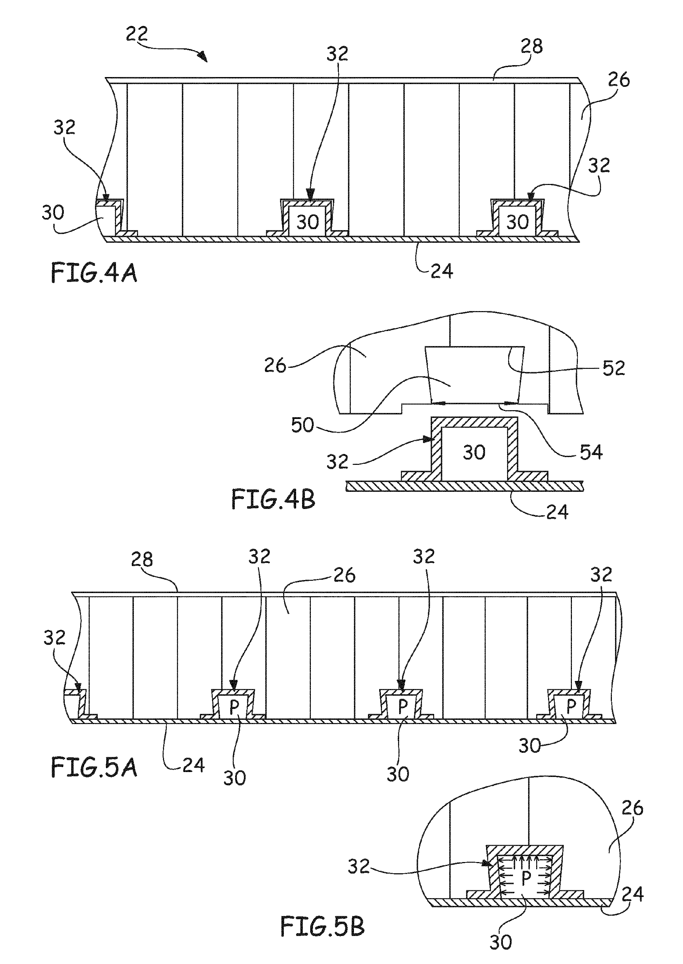

Comme illustré sur la figure 4A, la face 46 de la structure alvéolaire 26 est plaquée contre la face intérieure de la couche acoustiquement résistive 24. Préalablement à cette étape d'accostage, les pièces sont préparées pour subir une étape de soudage par diffusion, par exemple grâce à un décapage chimique. Après cette étape d'accostage, on procède à l'assemblage de la structure alvéolaire avec l'ensemble formé par la couche acoustiquement résistive 24 et les canaux 30 grâce à une technique de soudage par diffusion.

A cet effet, au moins les zones à assembler à savoir les extrémités des cellules de la structure alvéolaire 26, la couches acoustiquement résistive 24 et les parois 32 délimitant les canaux 30 sont portées à une température supérieure à un seuil donné. De manière concomitante, on injecte un gaz sous pression dans les canaux 30 visant à obtenir une expansion des parois 32 des canaux afin de les plaquer contre les extrémités des cellules de la structure alvéolaire 26, comme illustré sur les figures 5A et 5B. Avantageusement, on exerce simultanément un effort de pression visant à plaquer la couche acoustiquement résistive 24 contre la face 46 de la structure alvéolaire 26.

La combinaison de l'élévation de température et de pression conduit à obtenir une soudure continue au niveau des extrémités des cellules de la structure alvéolaire qui sont ainsi étanches entre elles.

Bien entendu, la température seuil et les pressions minimales dépendent des matériaux utilisés et plus particulièrement de leurs caractéristiques rhéologiques relatives à la superplasticité.

A titre d'exemple, pour des éléments à base d'alliage de titane, la température doit atteindre au niveau des zones de soudage 900°C.

Selon un autre avantage, cette solution permet de compenser les défauts géométriques des découpes 50 et des parois 32 délimitant les canaux 30. En effet, la paroi 32 peut s'expanser de manière différente d'un point à l'autre jusqu'à venir en contact avec les extrémités des cellules de la structure alvéolaire.

Avantageusement, chaque découpe 50 a une forme en contre dépouille comme illustré sur les figures 4A et 4B. Chaque découpe 50 comprend une section avec un fond 52 et une embouchure 54 via laquelle est introduit un canal 30.

Selon un mode de réalisation illustré, la découpe 50 a une forme en queue d'aronde. Toutefois, la plus grande largeur de la découpe n'est pas nécessairement prévue au niveau du fond.

Selon cette variante, lors de la phase d'assemblage, on réalise en même temps une déformation selon une technique de formage superplastique et un soudage par diffusion.

Ainsi lors de l'assemblage, les parois 32 des canaux 30 qui n'ont pas nécessairement une forme en contre dépouille initialement, s'expanse de manière à épouser les formes des découpes 50. Ainsi, après l'assemblage, les parois 32 des canaux 30 ont des formes en contre dépouille qui empêchent tout retrait des canaux des découpes ce qui contribue à obtenir une liaison résistante entre la couche acoustiquement résistive 24 et la structure alvéolaire 26.

## Revendications

1. Procédé de réalisation d'un panneau pour le traitement acoustique apte à être rapporté au niveau d'une surface d'un aéronef, notamment au niveau d'un bord d'attaque tel qu'une entrée d'air d'une nacelle d'aéronef, ledit panneau comprenant une couche acoustiquement résistive (24), au moins une structure alvéolaire (26) et une couche réflectrice (28), ainsi que des canaux (30) placés entre ladite structure alvéolaire (26) et la structure acoustiquement résistive (24), les canaux étant délimités chacun par une paroi (32), ledit procédé consistant à déformer une couche (34) afin d'obtenir au niveau d'une de ses faces des sillons (36), à plaquer et solidariser ladite couche (34) déformée à la couche acoustiquement résistive de manière à délimiter les canaux (30), **caractérisé en ce qu'**il consiste à effectuer un retrait de matière de manière à supprimer au moins une partie de l'épaisseur de la couche (34) dans laquelle sont formés les sillons (36) entre les canaux (30), préalablement à l'assemblage de la structure alvéolaire (26).

2. Procédé selon la revendication 1, **caractérisé en ce que** toute l'épaisseur de la couche (34) est retirée entre les canaux (30).

3. Procédé selon la revendication 1 ou 2, **caractérisé en ce qu'**il consiste à conserver au niveau de la couche (34) deux pattes (42) sensiblement parallèles à la couche acoustique résistive (24) de part et d'autre des canaux (30).

4. Procédé selon la revendication 3, **caractérisé en ce que** les pattes (42) ont une longueur comprise entre 2 et 10 mm

5. Procédé selon l'une quelconque des revendications précédentes, **caractérisé en ce que** le retrait de matière visant à supprimer une partie de la couche (34) est obtenu par jet d'eau.

6. Procédé selon l'une quelconque des revendications précédentes, **caractérisé en ce que** l'assemblage de la structure alvéolaire avec la couche acoustiquement résistive incorporant les canaux (30) est obtenu en élevant la température des zones à assembler et en injectant un gaz sous pression dans les canaux (30) afin d'expanser les parois (32) des canaux afin de les plaquer contre les extrémités des cellules de la structure alvéolaire (26).

7. Procédé selon la revendication 6, **caractérisé en ce qu'**il consiste à réaliser au niveau de la face (46) de la structure alvéolaire susceptible d'être en contact avec la couche acoustiquement résistive (24) des découpes (50) avec des formes en contre dépouille aptes à recevoir les canaux (30).

8. Procédé selon la revendication 7, **caractérisé en ce que** les découpes (50) ont une section en queue d'aronde.

9. Procédé selon l'une quelconque des revendications précédentes, **caractérisé en ce que** la couche (34) est une tôle métallique en alliage de titane.

10. Procédé selon l'une quelconque des revendications précédentes, **caractérisé en ce que** la couche (34) est mise en forme en utilisant une technique de formage superplastique.

11. Procédé selon l'une quelconque des revendications précédentes, **caractérisé en ce que** la couche (34) est solidarisée à la couche acoustiquement résistive (24) par une ligne continue au niveau de chaque bord de chaque canal.

## Patentansprüche

1. Verfahren zur Herstellung einer Platte für die Schallbehandlung, die sich zum Anbringen im Bereich der Oberfläche eines Luftfahrzeugs eignet, insbesondere im Bereich einer Anströmkante, wie beispielsweise ein Lufteinlass einer Gondel des Luftfahrzeugs, wobei die Platte eine schalldämpfende Schicht (24), wenigstens eine Kammerstruktur (26) und eine reflektierende Schicht (28) aufweist, ebenso wie Kanäle (30), die zwischen der Kammerstruktur (26) und der schalldämpfenden Struktur (24) angeordnet sind, wobei die Kanäle jeweils durch eine Wand (32) begrenzt sind, und wobei das Verfahren darin besteht, eine Schicht (34) zu verformen, um auf einer seiner Seiten Rillen (36) auszubilden, und die verformte Schicht (34) zur Begrenzung der Kanäle (30) an die schalldämpfende Schicht anzusetzen und mit dieser zu verbinden, **dadurch gekennzeichnet, dass** dieses darin besteht, eine Materialschwächung zu bewerkstelligen, um wenigstens einen Teil der Dicke der Schicht (34), in der die Rillen (36) ausgebildet sind, zwischen den Kanälen (30) zu verringern, vorzugsweise beim Zusammenbau der Kammerstruktur (26).

2. Verfahren nach Anspruch 1, **dadurch gekennzeichnet, dass** die gesamte Dicke der Schicht (34) zwischen den Kanälen (30) entfernt wird.

3. Verfahren nach Anspruch 1 oder 2, **dadurch gekennzeichnet, dass** dieses darin besteht, im Bereich der Schicht (34) zwei Laschen (42) zu erhalten, die auf beiden Seiten der Kanäle (30) im Wesentlichen parallel zu der schalldämpfenden Schicht (24) verlaufen.

4. Verfahren nach Anspruch 3, **dadurch gekennzeichnet, dass** die Laschen (42) eine Länge zwischen 2 und 10 mm haben.

5. Verfahren nach einem der vorhergehenden Ansprüche, **dadurch gekennzeichnet, dass** die Materialschwächung, die auf die Entfernung eines Teils der Schicht (34) zielt, durch einen Wasserstrahl erhalten wird.

6. Verfahren nach einem der vorhergehenden Ansprüche, **dadurch gekennzeichnet, dass** der Zusammenbau der Kammerstruktur mit der schalldämpfenden Schicht, die die Kanäle (30) einschließt, bewerkstelligt wird, indem die Temperatur der zusammenzufügenden Zonen erhöht wird und indem ein Gas unter Druck in die Kanäle (30) eingeleitet wird, um die Wände (32) der Kanäle zu erweitern und um diese an die Enden der Zellen der Kammerstruktur (26) anzusetzen.

7. Verfahren nach Anspruch 6, **dadurch gekennzeichnet, dass** dieses darin besteht, im Bereich der Seite (46) der Kammerstruktur, die dazu vorgesehen ist, in Kontakt mit der schalldämpfenden Schicht (24) zu treten, hinterschnittene Aussparungen (50) vorzusehen, die zur Aufnahme der Kanäle (30) geeignet sind.

8. Verfahren nach Anspruch 7, **dadurch gekennzeichnet, dass** die Aussparungen (50) einen schwalbenschwanzförmigen Querschnitt haben.

9. Verfahren nach einem der vorhergehenden Ansprüche, **dadurch gekennzeichnet, dass** die Schicht (34) ein metallisches Blech aus einer Titanlegierung ist.

10. Verfahren nach einem der vorhergehenden Ansprüche, **dadurch gekennzeichnet, dass** die Schicht (34) durch Verwendung einer Technik des superplastischen Umformens geformt wird.

11. Verfahren nach einem der vorhergehenden Ansprüche, **dadurch gekennzeichnet, dass** die Schicht (34) mit der schalldämpfenden Schicht (24) durch eine kontinuierliche Linie jeweils im Bereich der Kante von jedem Kanal verbunden wird.

## Claims

1. Process for the production of an acoustic treatment panel that can be connected at a surface of an aircraft, in particular at a leading edge such as an air intake of an aircraft nacelle, whereby said panel comprises an acoustically resistive layer (24), at least one alveolar structure (26), and a reflective layer (28), as well as channels (30) placed between said alveolar structure (26) and the acoustically resistive structure (24), said channels each being bordered by a wall (32), said process consisting in deforming a layer (34) so as to produce furrows (36) at one of its surfaces, in flattening and making integral said deformed layer (34) with the acoustically resistive layer in such a way as to border the channels (30), **characterized in that** it consists in removing material in such a way as to eliminate at least a portion of the thickness of the layer (34) in which the furrows (36) are formed between the channels (30), prior to the assembly of the alveolar structure (26).

2. Process according to Claim 1, wherein the entire thickness of the layer (34) is removed between the channels (30).

3. Process according to Claim 1 or 2, wherein it consists in preserving two lugs (42) at the layer (34) that are essentially parallel to the acoustically resistive layer (24) on either side of the channels (30).

4. Process according to Claim 3, wherein the lugs (42) have a length of between 2 and 10 mm.

5. Process according to any of the preceding claims, wherein the removal of material whose purpose is to eliminate a portion of the layer (34) is done by water jet.

6. Process according to any of the preceding claims, wherein the assembly of the alveolar structure with the acoustically resistive layer that incorporates the channels (30) is done by raising the temperature of the areas that are to be assembled and by injecting a pressurized gas into the channels (30) so as to expand the walls (32) of the channels so as to flatten them against the ends of the cells of the alveolar structure (26).

7. Process according to Claim 6, wherein it consists in making cut-outs (50) with undercut shapes that can accommodate the channels (30) at the surface (46) of the alveolar structure that can be in contact with the acoustically resistive layer (24).

8. Process according to Claim 7, wherein the cut-outs (50) have a dovetail cross-section.

9. Process according to any of the preceding claims, wherein the layer (34) is a sheet metal made of a titanium alloy.

10. Process according to any of the preceding claims, wherein the layer (34) is shaped by using a superplastic shaping technique.

11. Process according to any of the preceding claims, wherein the layer (34) is made integral with the acoustically resistive layer (24) by a continuous line at each edge of each channel.
